# EUROPEAN PATENT APPLICATION

(11) **EP 2 149 717 A2**
(43) Date of publication of application: **03.02.2010**
(21) Application number: 09275005.8
(22) Date of filing: 28.01.2009
(51) Int. Cl.: F16B 25/10

(54) **Self-drilling screw**

(30) Priority: 31.07.2008 TW 97213588 U
(71) Applicant: Sun Through Industrial Co. Ltd., Ho Meei Jenn, Changhua (TW)
(72) Inventor: Chen, Li-Hsia, Changhua (TW)
(74) Representative: Martin, Philip John

(57) **Abstract**

A self-drilling screw (10, 10', 10", 20) includes a top head portion (11), and a shank portion (12, 12', 12") having a thread (13) extending helically around an outer periphery thereof, and a non-threaded section (14) extending below the thread (13) and including a drill tip (140), a flute-confining face (142) confining a flute (1421) that extends upwardly and inclinedly from the drill tip (140), a land (143, 143', 143", 243) adjacent to the flute (1421) and having an inclined tapered face (1431) tapered to the drill tip (140), and an inclined cutting edge (1432, 1432', 1432", 2432) formed at a connection of the tapered face (1431) and the flute-confining face (142), and two opposite wing plates (15, 15', 15", 25) extending outwardly from the land (143, 143', 143", 243) above the drill tip (140). Each wing plate (15, 15', 15", 25) has a top wing edge (152), and a bottom wing edge (151, 151', 151", 251) proximate to the drill tip (140). The drill tip (140) and the bottom wing edge (151, 151', 151", 251) have therebetween an axial distance smaller than an axial distance between the top wing edge (152) and a bottom end of the thread (13).

## Description

This invention relates to a screw, more particularly to a self-drilling screw.

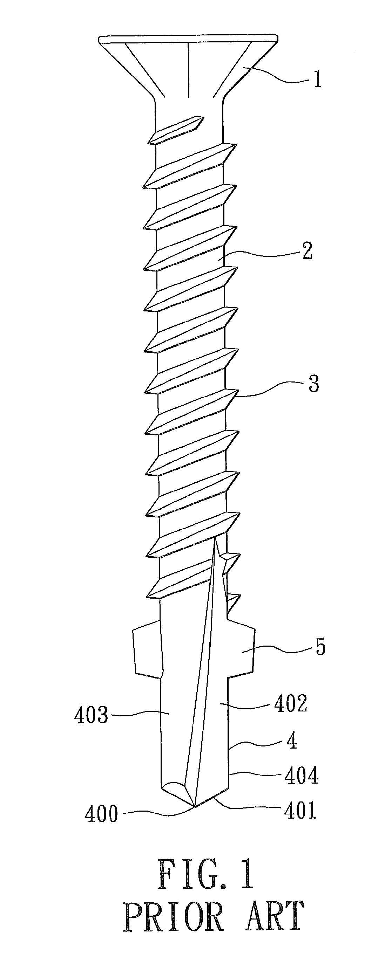

Referring to Fig. 1, a conventional self-drilling screw includes a top head portion 1, and a shank portion 2 connected to the top head portion 1 and having an external thread 3 helically extending around the shank portion 2, and a non-threaded section 4 extending downwardly from the external thread 3. The non-threaded section 4 includes a drill tip 400, a flute 402 extending upwardly and inclinedly from the drill tip 400 and having an inclined cutting edge 401, and a pair of opposite wing plates 5 extending outwardly from the non-threaded section 4 and which are proximate to a bottom end of the external thread 3. The conventional self-drilling screw uses the drill tip 400 and the cutting edge 401 to drill into a wood panel, after which the external thread 3 of the shank portion 2 is threaded into a steel panel so as to fasten together the wood and steel panels. The function of the wing plates 5 is to drill a large bore into the wood panel so that the external thread 3 does not engage the wood panel, and to facilitate discharge of wood shavings produced during the drilling operation. Further, the wing plates 5 are designed to fracture upon entering the steel panel and prior to engagement of the external thread 3 with the steel panel.

Although the aforementioned self-drilling screw can achieve its intendedpurpose, it has the following drawbacks :
1. Because the wing plates 5 are disposed distal from the drill tip 400 and the cutting edge 401, when the conventional self-drilling screw is drilled into a hardwood panel, the wing plates 5 are easily stuck within the wood panel. If this occurs, early fracture of the wing plates 5 may result, so that a discharging effect of the conventional self-drilling screw severely deteriorates.
2. Because the wing plates 5 are disposed distal from the drill tip 400 and the cutting edge 401, metal shavings produced by contact between the cutting edge 401 and the metal plate cannot be smoothly discharged. This adversely affects a tapping operation of the screw.

Therefore, the object of the present invention is to provide a self-drilling screw that is capable of overcoming the aforementioned drawbacks of the prior art.

According to this invention, a self-drilling screw comprises a top head portion, and a shank portion connected to the top head portion and having a thread extending helically around an outer periphery of the shank portion, and a non-threaded section extending below the thread. The non-threaded section includes a drill tip, a flute-confining face confining a flute that extends upwardly and inclinedly from the drill tip, a land adjacent to the flute and having an inclined tapered face tapered to the drill tip, and an inclined cutting edge formed at a connection of the tapered face and the flute-confining face, and two opposite wing plates extending outwardly from the land above the drill tip. Each of the wing plates has a top wing edge, and a bottom wing edge proximate to the drill tip. The drill tip and the bottom wing edge have therebetween an axial distance smaller than an axial distance between the top wing edge and a bottom end of the thread.

Other features and advantages of the present invention will become apparent in the following detailed description of the preferred embodiments of the invention, with reference to the accompanying drawings, in which:
Fig. 1 is a schematic view of a conventional self-drilling screw;
Fig. 2 is a schematic view of a self-drilling screw according to the first preferred embodiment of the present invention;
Fig. 3 is a fragmentary enlarged schematic view of the first preferred embodiment;
Fig. 4 is a schematic view of the first preferred embodiment in a state of use;
Fig. 5 is a fragmentary enlarged schematic view of a self-drilling screw according to the second preferred embodiment of the present invention;
Fig. 6 is a fragmentary enlarged schematic view of a self-drilling screw according to the third preferred embodiment of the present invention; and
Fig. 7 is a fragmentary enlarged schematic view of a self-drilling screw according to the fourth preferred embodiment of the present invention.

Before the present invention is described in greater detail, it should be noted that the same reference numerals have been used to denote like elements throughout the specification.

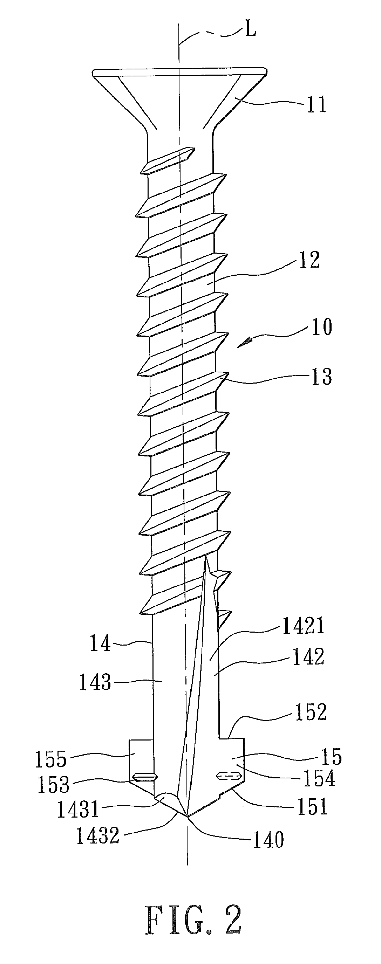

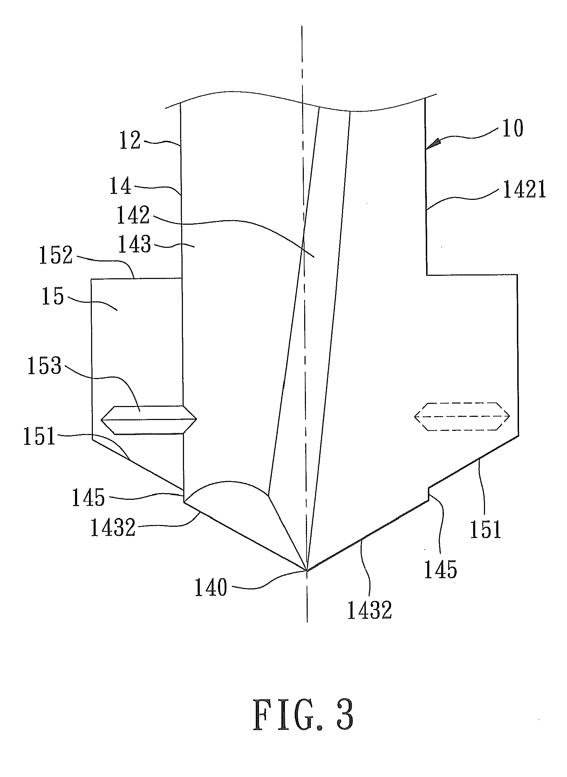

Referring to Figs. 2 to 4, a self-drilling screw 10 according to the first preferred embodiment of the present invention is shown to comprise a top head portion 11 and a shank portion 12.

The shank portion 12 defines an axis (L), and is connected to one side of the top head portion 11. The shank portion 12 has a thread 13 extending helically around an outer periphery of the shank portion 12, and a non-threaded section 14 extending below the thread 13. In this embodiment, the non-threaded section 14 includes a drill tip 140, two symmetrical and opposite flute-confining faces 142 (only one is shown), two lands 143 (only one is shown), two opposite wing plates 15, and two reinforcing ribs 153.

Each of the flute-confining faces 142 confines a flute 1421 that extends upwardly and inclinedly from the drill tip 140. Each of the lands 143 is adjacent to the flute 1421, and has an inclined tapered face 1431 tapered to the drill tip 140, and an inclined cutting edge 1432 formed at a connection of the tapered face 1431 and the flute-confining face 142 (on the opposite side of the self-drilling screw 10). The wing plates 15 extend outwardly and respectively from the lands 143 above the drill tip 140. Each wing plate 15 has a top wing edge 152, a bottom wing edge 151 proximate to the drill tip 140, a first face 154 between the top and bottom wing edges 152, 151 and extending continuously from the respective flute-confining face 142, and a second face 155 opposite to the first face 154 and connected to the respective land 143. In this embodiment, the bottom wing edge 151 is inclined with respect to the axis (L) of the shank portion 12. Each of the reinforcing ribs 153 extends transversely of the non-threaded section 14 from the second face 155 of a respective one of the wing plates 15 to a corresponding one of the lands 143.

Preferably, the non-threaded section 14 is stepped to form two opposite shoulders 145, each of which interconnects the bottom wing edge 151 of one of the wing plates 15 and the cutting edge 1432 of a corresponding one of the lands 143. The drill tip 140 and each of the bottom wing edges 151 of the wing plates 15 has therebetween an axial distance smaller than an axial distance between each of the top wing edges 152 of the wing plates 15 and a bottom end of the thread 13 of the shank portion 12.

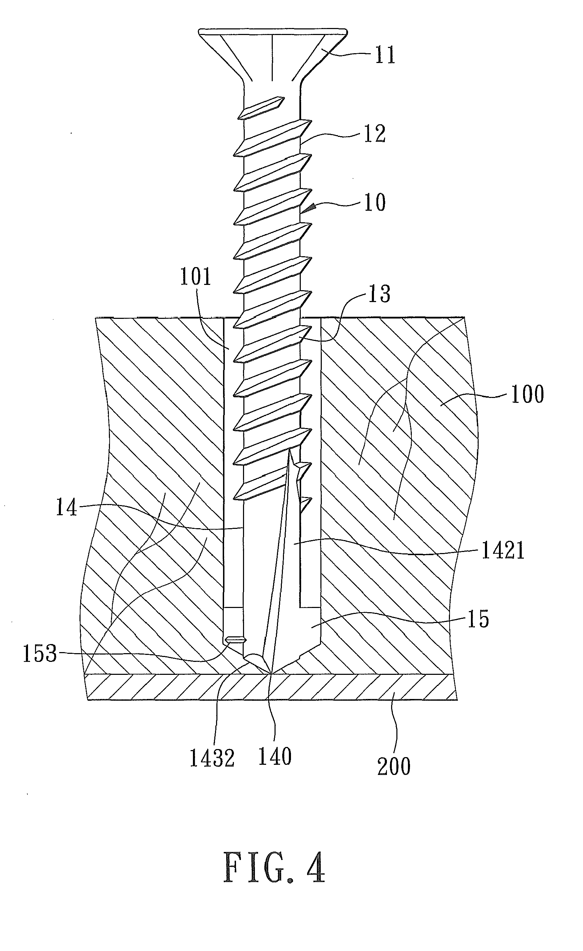

With reference to Fig. 4, to use the self-drilling screw 10 for interconnecting a wood panel 100 and a steel panel 200, the cutting edges 1432 of the lands 143 and the drill tip 140 are drilled first into the wood panel 100, and wood shavings produced therefrom are discharged through the wing plates 15 and the flutes 1421 of the flute-confining faces 142. With continuous drilling, the wing plates 15 drill a large bore 101 into the wood panel 100 so that the thread 13 will not engage the wood panel 100. As the screw 10 advances into the steel panel 200, the wing plates 15 are fractured through contact with the steel panel 200, and the thread 13 is threaded into the steel panel 200, thereby interconnecting the wood and steel panels 100, 200. Drilling is continued until the top head portion 11 abuts against the wood panel 100. Through the provision of the reinforcing ribs 153 on the wing plates 15, the wing plates 15 are prevented from early fracture due to contact with the wood panel 100 (i.e., when the wood panel 100 is hard), so that smooth discharge of the wood shavings can be ensured.

The advantages of the present invention can be summarized as follows:
1. Because the wing plates 15 are proximate to the drill tip 140, the wing plates 15 can effectively discharge wood shavings, and therefore will not become stuck within the wood panel 100. Hence, the wing plates 15 will not experience early fracture.
2. Because the wing plates 15 are proximate to the drill tip 140, metal shavings produced when the drill tip 140 and the cutting edges 1432 drill into the steel panel 200 can be discharged through the wing plates 15, so that a tapping operation of the screw 10 can be performed smoothly.

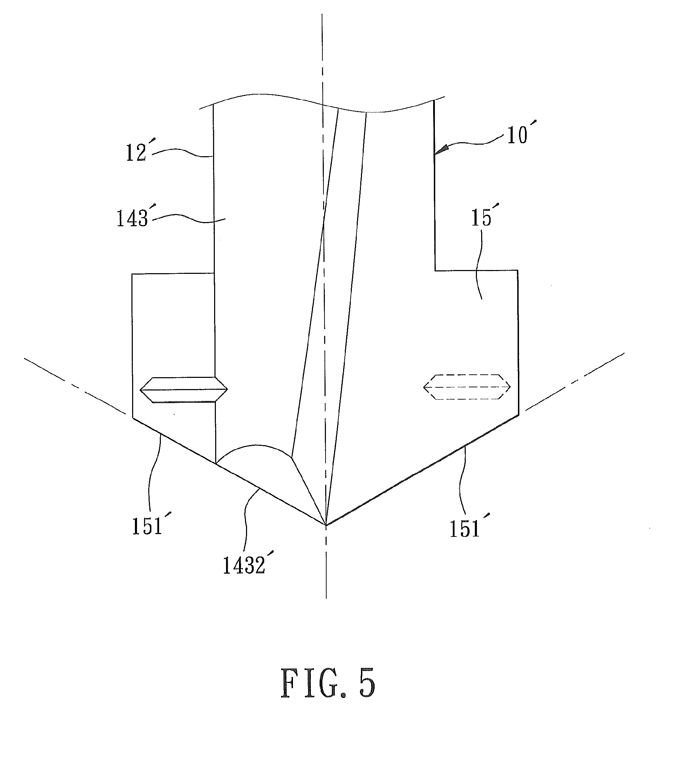

Referring to Fig. 5, a self-drilling screw 10' according to the second preferred embodiment of the present invention is shown to be similar to the first preferred embodiment. However, in this embodiment, the bottom wing edge 151' of each wing plate 15 and the cutting edge 1432' of the corresponding land 143' lie on the same line that is inclined to the axis (L) of the shank portion 12' . Advantages of the first preferred embodiment can be similarly achieved using the second preferred embodiment.

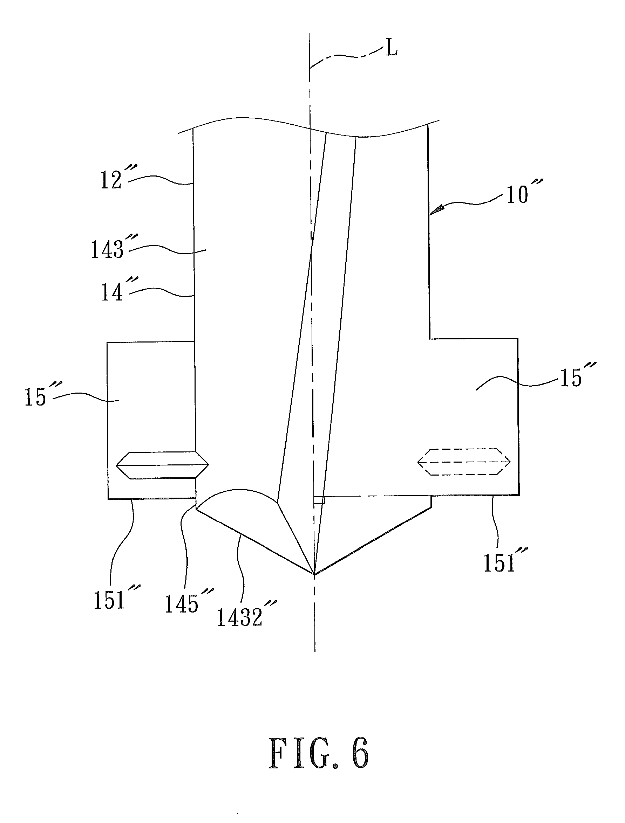

Referring to Fig. 6, a self-drilling screw 10" according to the third preferred embodiment of the present invention is shown to be similar to the first preferred embodiment. However, in this embodiment, the bottom wing edge 151" of each wing plate 15" is perpendicular to the axis (L) of the shank portion 12". Each shoulder 145" of the non-threaded section 14" interconnects the bottom wing edge 151" of the corresponding wing plate 15" and the cutting edge 1432" of the corresponding land 143". Advantages of the first preferred embodiment can be similarly achieved using the third preferred embodiment.

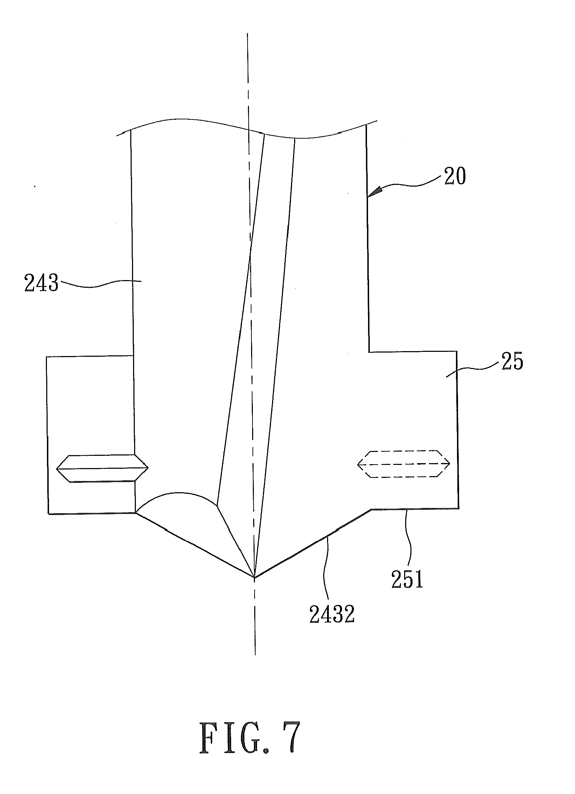

Referring to Fig. 7, a self-drilling screw 20 according to the fourth preferred embodiment of the present invention is shown to be similar to the third preferred embodiment. However, in this embodiment, the bottom wing edge 251 of each wing plate 25 is connected to the cutting edge 2432 of the corresponding land 243 in such a manner that the bottom wing edge 251 and the cutting edge 2432 form therebetween an obtuse angle. Advantages of the first preferred embodiment can be similarly achieved using the fourth preferred embodiment.

## Claims

1. A self-drilling screw (10, 10', 10", 20) comprising:
a top head portion (11); and
a shank portion (12, 12', 12") connected to said top head portion (11) and having a thread (13) extending helically around an outer periphery of said shank portion (12, 12', 12"), and a non-threaded section (14, 14") extending below said thread (13), said non-threaded section (14, 14") including a drill tip (140), a flute-confining face (142) confining a flute (1421) that extends upwardly and inclinedly from said drill tip (140), a land (143, 143', 143", 243) adjacent to said flute (1421) and having an inclined tapered face (1431) tapered to said drill tip (140), and an inclined cutting edge (1432, 1432', 1432", 2432) formed at a connection of said tapered face (1431) and said flute-confining face (142);
**characterized by**
said non-threaded section 914) further including two opposite wing plates (15, 15', 15", 25) extending outwardly from said land (143, 143', 143", 243) above said drill tip (140), each of said wing plates (15, 15', 15", 25) having a top wing edge (152), and a bottom wing edge (151, 151', 151", 251) proximate to said drill tip (140); and
said drill tip (140) and said bottom wing edge (151, 151', 151", 251) having therebetween an axial distance smaller than an axial distance between said top wing edge (152) and a bottom end of said thread (13).

2. The self-drilling screw (10, 10', 10", 20) of Claim 1, wherein at least one of said wing plates (15, 15', 15", 25) further has a first face (154) between said top and bottom wing edges (152, 151, 151', 151", 251) and extending continuously from said flute-confining face (142), and a second face (155) opposite to said first face (154) and connected to said land (143, 143', 143", 243), said non-threaded section (14) further including two reinforcing ribs (153) each extending transversely of said non-threaded section (14) from said second face (155) of a respective one of said wing plates (15, 15', 15", 25) to said land (143, 143', 143", 243).

3. The self-drilling screw (10, 10') of any one of Claims 1 and 2, wherein said bottom wing edge (151, 151') is inclined with respect to an axis of said shank portion (12, 12').

4. The self-drilling screw (10') of any one of claims 1 to 3, wherein said bottom wing edge (151') and said cutting edge (1432') lies on the same line.

5. The self-drilling screw (10, 10") of any one of Claims 1 to 3, wherein said non-threaded section (14) is stepped to form a shoulder (145, 145") interconnecting said bottom wing edge (151, 151") and said cutting edge (1432, 1432").

6. The self-drilling screw (10", 20) of any one of Claims 1 and 2, wherein said bottom wing edge (151", 251) is perpendicular to an axis of said shank portion (12").

7. The self-drilling screw (10") of any one of Claims 1, 2 and 6, wherein said non-threaded section (14) is stepped to form a shoulder (145") interconnecting said bottom wing edge (151") and said cutting edge (1432").

8. The self-drilling screw (20) of any one of Claims 1, 2, 6 and 7 wherein said bottom wing edge (251) and said cutting edge (2432) form therebetween an obtuse angle.
